(19) Europäisches Patentamt
European Patent Office
Office européen des brevets

(11) **EP 2 833 308 A1**

(12) **EUROPEAN PATENT APPLICATION**

(43) Date of publication:
**04.02.2015 Bulletin 2015/06**

(51) Int Cl.:
***G06Q 30/02*** (2012.01)

(21) Application number: **13178759.0**

(22) Date of filing: **31.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Cogisen SRL**
**80121 Napoli (IT)**

(72) Inventor: **Millar, Damon**
**London, NW1 5DP (GB)**

(74) Representative: **Leone, Mario et al**
**Cantaluppi & Partners S.r.l.**
**Viale della Tecnica, 205**
**00144 Roma (IT)**

(54) **System and method for estimating views on display areas using eye tracking**

(57)     A system and a method for estimating views on display areas, in particular areas provided on a display, i.e. the screen of any kind of screen provided device, e.g. a smartphone, a tablet, a laptop, a PC screen of any kind, a TV screen, an interactive screen, a display provided advertising board etc. makes it possible for advertisements to react to users' attention, providing a natural indication of attention, that can also be commoditised and sold, and comprises a display wherein at least certain areas are provided, delimited by in a respective visually displayed portion on the display; a camera associated with said display, apt to frame a user's face and thereby producing a digital video stream thereof; gaze tracking means, operating with processor means, receiving said video stream and continuously generating a gaze pattern of the user's gaze on the display, the interaction between said gaze pattern and said at least certain areas on the display resulting in view patterns continuously generated for each of said at least certain areas ; and means for comparing each of said view patterns with one or more predefined viewer's attention patterns to continuously produce view information according to said view patterns.

*Fig. 5*

EP 2 833 308 A1

**Description**

**Background of the invention**

**1. Field of the invention**

The present invention is related to a system and a method for estimating views on display areas, in particular areas provided on a display, i.e. the screen of any kind of screen provided device, e.g. a smartphone, a tablet, a laptop, a PC screen of any kind, a TV screen, an interactive screen, a display provided advertising board; such list being not intended for a limitative purpose.

In particular, the system and the method provided according to the present invention are conceived for producing billing information based on the views of certain displayed areas on a display and for managing the content of the display areas, especially but non exclusively in case of a web interface on the display.

Such system and method can be successfully applied for evaluating the effectiveness of the images displayed through a device screen for billing the related views accordingly, in particular in the advertisement field.

**2. Description of the prior art**

In the field of online advertising, payment systems are limited to what a mouse or touch screen could sense. The most common methods of selling advertisements are:

- "Pay-per-click" - where the advertiser is billed every time a user clicks on an advertisement defined on a certain area having any shape, e.g. a banner or a video frame and so on;

- "Pay per impression" - where the advertiser is billed each time an advertisement is served to a viewer on any kind of display.

The problems associated with these systems based on touch and/or mouse are:

- it is not possible to measure the true interaction between a human user and the advertisement, i.e. the view thereof, so advertisements are priced on how many impressions, i.e. how many times they are presented to a user, even though most advertisements are never even looked at;

- there is no way to tell if an advertisement has been really seen by a human user;

- there is no way to tell whether a user really looked at an advertisement before or while clicking on it;

- many web browsers contain ad-blocking systems, the result is that an advertiser is billed for serving advertisements that are never displayed;

- if clicking is the only metric, there is no way to measure the effectiveness of advertisements that are designed for viewing, not clicking;

- there is no way to gauge a viewer's interest before clicking. They may have examined the advertisement for minutes, or at the other extreme they may have accidentally clicked, the click looking and costing the same;

- advertisements are prone to fraudulent so-called click farms, where people or virtual machines click on companies advertisements, to deplete their advertising budget.

Such problems are particularly felt when the advertisements are served through a web interface, where the advertisement occupies a small area of the screen, since the user may not be attracted by an advertisement, his/her attention being focused on a web content of his/her interest.

These drawbacks consistently limit the diffusion of advertise services, especially for mobile devices connected to the Internet, wherein only a very reduced area of a inherently small screen can be dedicated to an advertisement, in this case being substantially impossible to detect the user's attention.

As a matter of fact, on this kind of devices, a touch sensitive advertising area on a small screen may significantly bother a user if the area occupies a substantial part of the screen, because it interferes with the gesture required to manage the display. On the other hand, a smaller area may not catch the user's interest and such interest is hardly detectable without sensing the voluntariness of a possible activating touch.

**Summary of the Invention**

The purpose of the present invention is to enable any kind of device having a screen to display images to evaluate the effectiveness of what is shown on certain areas of the display, i.e. even a single very small area or a plurality of areas visually displayed on the screen, so as to make possible both the real time management of these areas, e.g. through a web browser, and a billing based on the interest expressed by the user but possibly without interfering with the user's experience.

Therefore, such invention may be applied to any mobile and even small device including a screen, and to large devices such as TV screen and digital advertising boards as well as surfaces or areas that do not contain a screen.

However, it is intended that the resent invention is not limited by the area dimensions relative to the dimensions of the whole display: a whole display area may be evaluated as is done for a very small area.

An eye tracking equipment may measure user's interest instead of or in addition to a mouse or a touch-based system.

For widespread use, some conditions should be met by the eye tracking system. First, such equipment should not require any additional technical features than commercially available devices. Current state of the art devices sold and interested by the present invention have a screen to be used as display and a so-called frontal camera, for framing the user's face while the device is used, possibly with no use of an illuminating equipment which may disturb the user.

Then, since the information is required in real time to manage the images shown through the device, the system embedded within the device may use minimal processing resources, so as to not deplete the energy available to the device, i.e. the possible battery, and so as to not interfere with any software running on the device itself.

Hence, an advanced live eye-tracking system may be used to overcome the drawbacks mentioned with reference with prior art. A system for tracking a user's gaze is available in the European patent application No. 13162802.6 by the same Applicant of the present application. In the following, the estimation of users' views on areas possibly delimited in a respective visually displayed portion on a display is discussed. The portion may have a boxed shape or even an irregular shape, possibly determined by the representation of an object on the display; also a video or a part of a video may be considered as a visually displayed portion on a display. An example of such visually displayed portion is provided by banners or frames on a web browser interface or on a digital display running a software with a visual interface, full screen or delimited inside a window. It is understood that a full screen image may be considered as a visually displayed portion.

A camera means any kind of commercially available camera associated with a display, which is apt to frame a user's face thereby producing a continuous digital video stream thereof, i.e. without using any other special equipment or technical feature. The camera is associated with a display, i.e. a screen, a graphic board, a scene where objects are displayed, a digital board. The camera may be embedded in a device with a screen or it may be provided thanks to an external camera, e.g. a webcam or the like, in any known spatial relationship with the display and the users' face.

The camera is positioned so as to frame a user's face, i.e. a useful portion of user's face to performing the task of tracking user's gaze direction on the display.

In view of the above, the present invention is a system for estimating views on display areas, comprising:

- a display wherein at least certain areas are provided, delimited in a respective visually displayed portion on the display;

- a camera associated to said display, apt to frame a user's face and thereby producing a digital video stream thereof;

- gaze tracking means, operating with processor means, receiving said video stream and continuously generating a gaze pattern of the user's gaze on the display, the interaction between said gaze pattern and said at least certain areas on the display resulting in view patterns continuously generated for each of said at least certain areas; and

- means for comparing each of said view patterns with one or more predefined patterns to continuously produce view information according to said view patterns.

Further, the present invention is also related to a method for estimating views on display areas on at least one display wherein at least certain areas are shown, delimited in a respective visually displayed portion on the display, a camera being associated to said display apt to frame a user's face, thereby producing a digital video stream thereof, comprising the steps of:

- continuously tracking the user's gaze on the display from said digital video stream and continuously generating a gaze pattern of the user's gaze on the display, the interaction between said gaze pattern and said at least certain areas on the display resulting in view patterns continuously generated for each of said at least certain areas; and

- comparing each of said view patterns with one or more predefined patterns to continuously produce view information according to said view patterns.

According to preferred embodiments of the present invention said at least certain areas are provided on the display through a remote server, possibly but not necessarily through a network. Said view patterns are sent from a device incorporating said display to the remote server for comparing each of said view patterns with one or more predefined viewer's attention patterns to produce view information.

Further a plurality of devices, each incorporating one or more displays, may be connected to a remote server for comparing each of said view patterns with one or more predefined viewer's attention patterns to produce said view information. In such connection, the camera, the gaze tracking means and the processor means being incorporated within the device.

In case of a web browser displayed on the device screen, the web content can be modified by the remote server according to said view information, and said view information may include billing information continuously derived from the comparison between each of said view patterns with said one or more predefined viewer's attention patterns.

Hence, live eye tracking makes it possible for advertisements to react to users' attention, providing a natural indication of attention, which can also be commoditised and sold.

Further details and advantages of the present invention will be disclosed hereinafter, in connection with a plurality of possible embodiments thereof, given with an exemplarily and non-limitative purpose with regard to the attached drawings.

**Brief Description of the Drawings**

- Figure 1 shows an application of the system and the method according to the invention, wherein a pay for view process with view counts is executed;

- Figure 2 shows an application of the system and the method according to the invention, wherein a pay for view process based on the viewed advertisement time is executed;

- Figure 3 shows an application of the system and the method according to the invention, wherein a time of guaranteed view is measured;

- Figure 4 shows an application of the system and the method according to the invention, wherein the exit from a guaranteed view is used as a trigger;

- Figure 5 shows an application of the system and the method according to the invention, wherein a fixation in a guaranteed view is used as a trigger;

- Figure 6 shows an application of the system and the method according to the invention, wherein a saccade pattern on the display in a guaranteed view is used as a trigger;

- Figure 7 shows an application of the system and the method according to the invention, wherein a looking around is observed in a click context;

- Figure 8 shows an application of the system and the method according to the invention, used as a cross check in a click context;

- Figure 9 shows an application of the system and the method according to the invention, wherein, in a click context, the observation time is checked;

- Figures 10 to 13 show an application of the system and the method according to the invention, wherein a dynamic advertisement selection is carried out;

- Figure 14 shows an application of the system and the method according to the invention, wherein a gaze reactive advertisement change responding to a user's attention is provided

- Figure 15 shows an application of the system and the method according to the invention, wherein a gaze reactive advertisement change is based on a measured engagement of the user;

- Figure 16 shows an application of the system and the method according to the invention, wherein a pay-per-proportion of attention is proposed;

- Figure 17 shows an application of the system and the method according to the invention, wherein an area on the display has an active size on the basis of the user's attention;

- Figure 18 shows an application of the system and the method according to the invention, wherein task context based pricing is the determined by the user's attention;

- Figure 19 shows an application of the system and the method according to the invention, wherein the area size is modulated to reach an average attention across users;

- Figure 20 shows an application of the system and the method according to the invention, wherein the user's expression is priced based on the view pattern;

- Figure 21 shows an application of the system and the method

according to the invention, wherein a pattern-based-per-user pricing is used;

- Figure 22 shows an application of the system and the method according to the invention, wherein it is highlighted that the area size is not a good measure of attention;

- Figure 23 shows an application of the system and the method according to the invention, wherein more attractive advertisements are billed on the basis of the user's attention;

- Figure 24 shows an application of the system and the method according to the invention, wherein the shape or colour of the area is managed, providing it takes only the agreed percentage of attention;

- Figure 25 shows an application of the system and the method according to the invention, wherein an advertisement is chosen to match the user's attention profile;

- Figure 26 shows an application of the system and the method according to the invention, wherein the advertisements use the attention left over from the user's task;

- Figure 27 shows an application of the system and the method according to the invention, wherein advertisements can be chosen to fit the spare attention profile;

- Figure 28 shows an application of the system and the method according to the invention, wherein the advertiser purchases part of a primary attention profile layer attention to match the advertisement profile;

- Figure 29 shows an application of the system and the method according to the invention, wherein the task attention is swapped to obtain an advertisement profile;

- Figure 30 shows an application of the system and the method according to the invention, wherein advertiser's attention requirements are exchanged to fit available attention;

- Figure 31 shows an application of the system and the method according to the invention, wherein swapping attention profile layers is used to determine a cost;

- Figure 32 shows an application of the system and the method according to the invention, wherein a gaze-time threshold is used, at which a click is valid;

- Figure 33 shows an application of the system and the method according to the invention, wherein a non-linear price of click over viewing time is used;

- Figure 34 shows an application of the system and the method according to the invention, wherein a click-based pricing is used in combination with the gaze position;

- Figure 35 shows an application of the system and the method according to the invention, wherein a repetition-based pricing is used, by counting the number of gazes;

- Figure 36 shows an application of the system and the method according to the invention, wherein a pattern-based pricing is used, by examining what a pattern attention the eye movements suggest;

- Figure 37 shows an application of the system and the method according to the invention, wherein a user is prepared to regularly look at a certain location;

- Figure 38 shows an application of the system and the method according to the invention, wherein sequencing advertisements in a row is used to modify the user's attention profile;

- Figure 39 shows an application of the system and the method according to the invention, wherein an advertisement is placed on the eye track between topics;

- Figure 40 shows an application of the system and the method according to the invention, wherein an advertisement is thematically selected and placed between two items looked at;

- Figure 41 shows an application of the system and the method according to the invention, wherein the advertisement is an extrapolation of previously looked at items;

- Figure 42 shows an application of the system and the method according to the invention, wherein a sequence of advertisements is turned into a story by the reader, allowing the advertising of a product that is not explicitly shown; and

- Figure 43 shows an application of the system and the method according to the invention, wherein things that the user has looked at are examined, and advertisement are chosen to create a story that is stronger than individual advertisements.

## Description of the preferred embodiments

With reference to the figures, a user observes a display wherein at least certain areas are provided, delimited by a respective visually displayed portion on the display, namely a single boxed area.
The square display shown in this figure and in the following ones has been devised to represent any kind of display, on a screen or on another kind of display: a digital board, a 3D holographic scene and so on.
The display is provided with a camera associated therewith, apt to frame a user's face, and thereby producing a digital video stream thereof.
Here, it is intended that the framing of the user's face is carried out with the purpose of tracking the user's gaze on the display. Therefore, only a portion of the face may be framed, but including the eye area to catch eye movements.
Further, the spatial relationship between camera and display must be known. The camera may be integral with the device providing the display, like in e.g. a mobile phone, a tablet, a laptop, or separately provided with a webcam device like in a PC with separated monitor, a flat screen TV etc.
Possibly, a calibration step may be included in the system operation to set said spatial relationship.
Then, gaze tracking means are provided, operating with processor means, receiving said video stream from said camera and continuously generating a gaze pattern of the user's gaze on the display.
It is herein understood that continuously may mean associated with all the frames of the video stream or with a frequency lower than that of the video shot by the camera. Moreover, the frequency frame of the video may consistently vary within the scope of the present system.
The gaze pattern can include different kinds of data which will be detailed in the following. These data give an indication about the interaction between the user's gaze, represented by the respective gaze pattern, and the areas on the display.
Such an interaction results in one or more view patterns continuously generated for each area under monitoring.
Finally, means are provided for comparing each of said view patterns with one or more predefined patterns which are provided to establish an estimation of the interaction between the user and the display under observation. Hence, said comparison continuously produces view information according to said view patterns which may be used for a live estimation of the user's behaviour and possibly to bill any consistent view in a pay per gaze environment.

In this connection, said areas may include advertisements or pictures or even videos or commercials, sold to the viewer or paid to a provider by the advertiser or publisher.

In the above systems, the view patterns obtained through the gaze tracking process can be used for varying the images within the areas of interest, or to determine what, when, where and how to show anything in the display.

Specifically, the areas may be managed via a remote server, possibly through a network and a web browser, the areas substantially being web content. In this connection, the system may sent either the raw data to the server concerning the view patterns, to have them processed in the server itself, or the results of the elaboration of the view profile according to said predefined patterns.

In this way, a plurality of devices can be remotely managed, e.g. mobile device through a cellular network, each of them reacting on the basis of its user's view on the device display. In this embodiment, the display and the camera can be advantageously incorporated in the same mobile device.

The information exchanged by the devices and the server can be used to bill the views of the areas of interest, basing the billing not only on the views as such, but on different features of the views themselves, i.e. the timing, the quality, the intensity of the gaze, showing the user's interest on what he/she sees.

Many examples of how the areas may be managed through the use of a live eye-tracking will be detailed hereinafter.

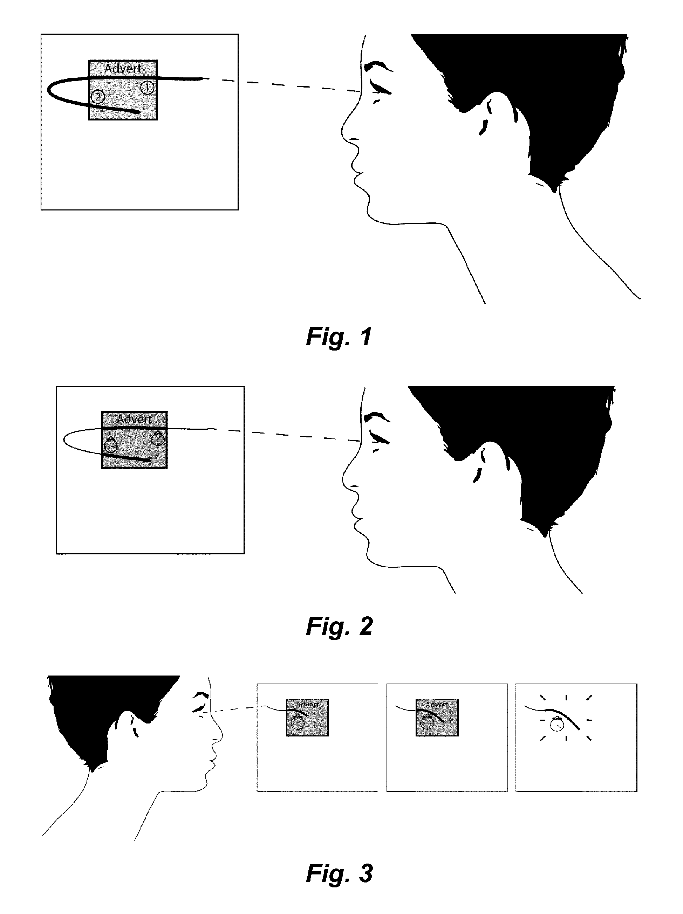

With reference to Figure 1, the system can count the views instead of the impressions, by knowing when a user actually looks at the boxed area. In case of an advertisement, the advertiser can be billed based on how often their advertisement is viewed, not on how often it is presented.

The advertiser may also be billed depending on the amount of time a user spends looking at the advertisement, in "pay for view time" model (Figure 2).

A variant of the pay-per-view or pay-per-gaze model is a guaranteed-view model, wherein advertisers can make sure that their advertisement has been seen. This may be important for example before providing a service that is paid for by advertising.

With reference to Figure 3, an advertisement area is shown on the display until a predetermined time of viewing at that area is expired, or until the user looks at it.

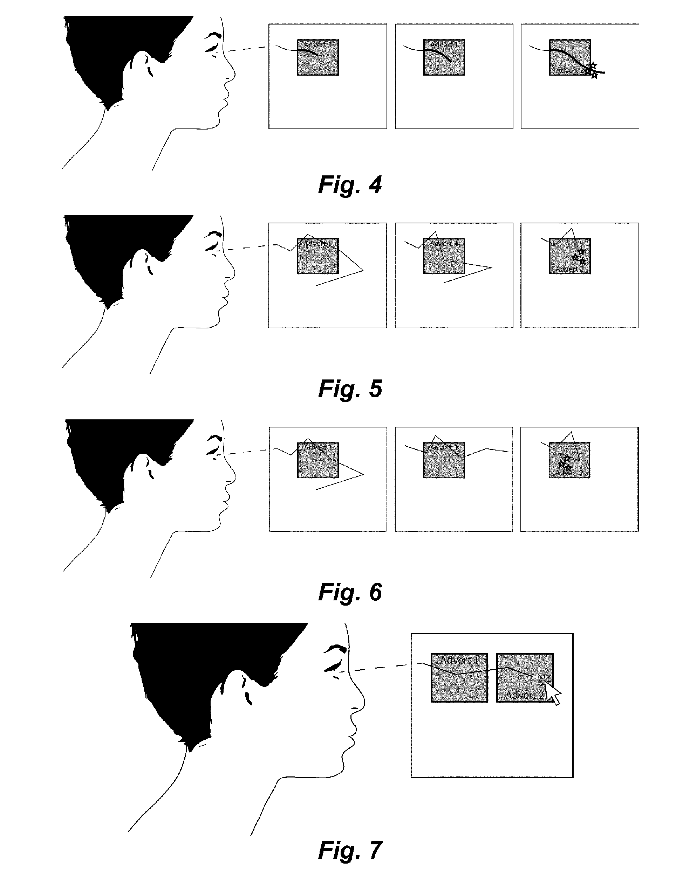

In another example (Figure 4), an advertisement is prominently displayed, possibly covering an underlying content, until a user has looked at it.

The trigger for knowing an advertisement has been sufficiently observed may be based on analysis of eye movement, and the fixation positions, i.e. the points at which the eye movement pauses. For example, an advertisement may require multiple fixations (Figure 5), to ensure it has been completely viewed.

Rather than counting the number of fixations, the trigger also may be a certain pattern of fixations. With reference to Figure 6, a view pattern showing a saccade operates as a trigger.

If the device providing the display is a laptop or a PC, or if it has a touch-sensitive screen like a common mobile phone or a tablet, the system and the method according to the present invention may be used in combination with a mouse click or a tap on the screen, i.e. in combination with a pointer system acting on the display to highlight or activate the areas of interest.

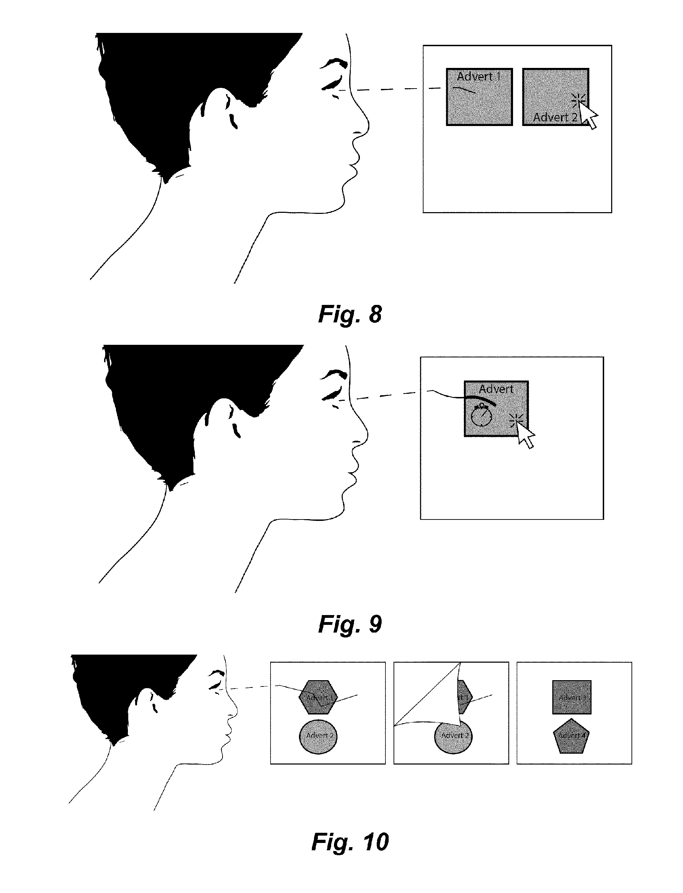

With reference to Figure 7, the click on a specified area assumes an additional value if, at the same time, that area is under observation by a user. If a click is made, advertisers may be sent additional information, - either in raw or processed form, that tells them information about the user's behaviour immediately before making the click. In this way, a voluntary click may be distinguished from a random or erroneous click (Figure 8).

Moreover, the quality of the click may be assessed, for instance measuring the time used to read and/or appreciate the area of interest and the advertiser may then be billed accordingly (Figure 9).

The system according to the invention can also be used to dynamically select what will be displayed on the basis of what has been observed before.

By observing what other advertisements and/or screen content the user looked at, it may be possible to serve them more appropriate advertisements, that they are more likely to find interesting. More interesting advertisements are likely to please the users, who will see more of what interests them, advertisers, whose advertisements are better targeted at people interested, rather than the random public, and advertisement suppliers, who can harness this increased value to receive more money per single advertisement.

The dynamic nature of the advertisement could be per-page-request, so each "round" of advertisement selection is concluded when the next page is served (Figure 10).

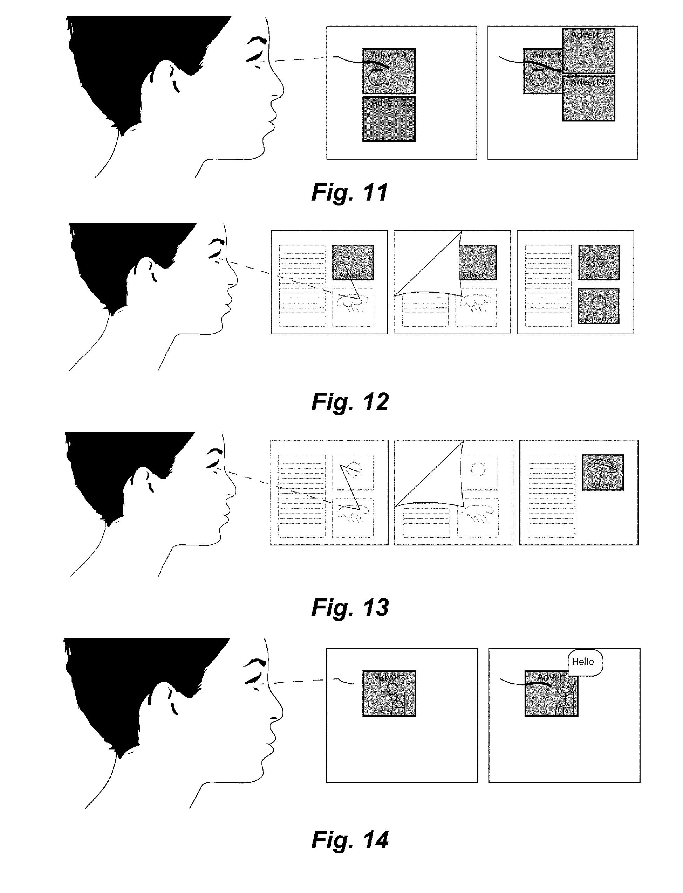

On the basis of the view profile centred on a certain area, additional content may be served (Figure 11) beside the area which has been looked at by the user; the same applies for a new round of advertisements.

Otherwise, the user's attention may be measured both on advertisements and on any content that can be categorized, e.g. news articles, pictures etc, and then the next advertisement can suggested on the basis of what the user intentionally looked at (Figure 12).

Further, advertisers and publishers may set a threshold, so that their advertisements or content are only shown when an interest threshold in their topic has been reached. This prevents non-serious enquiries from the general public. This threshold may for example be based on time, specificity of interest on a certain item, levels of interest etc. (Figure 13).

Another application is represented by an advertisement or another kind of content which is statically shown but it is able to react on the basis on the user's gaze indicating a specific interest.

By way of example, if the system senses that a user has looked at a certain displayed area, it may introduce itself verbally, e.g. "hello, I see you're looking at me", or visually by changing appearance, or even starting a video (Figure 14). The behaviour of what is represented in the area, e.g. the virtual face of a remote assistant, may mimic the way humans respond to being looked at, by addressing or greeting the viewer.

Gaze-reactive advertisements offer to the advertisement-suppliers pricing opportunities based on number of initial views and engagement time.

As a matter of fact, different advertisement-suppliers may compete with each other to make the most distracting advertisements so as to catch the user's gaze. However, the system according to the invention may be used to gauge the amount of attention that is taken from a user. This may happen passively or actively.

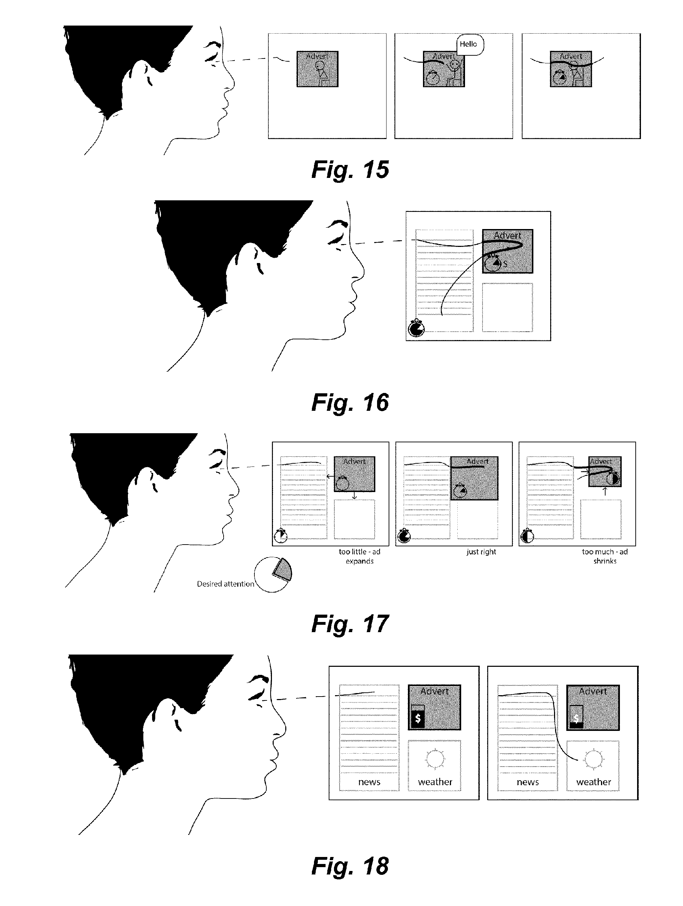

In passive attention-based advertising, an advertiser pays for the amount of distraction they have caused the user. If a user spends 10% of their task time viewing an accompanying advertisement, the advertiser will be charged accordingly. If an advertiser makes an inappropriately eye-catching advertisement that captures 50% of a user's task time, then they will be charged more (Figure 16).

Active attention-based advertisements could increase in visual appeal, e.g. change size, colour contrast, shape or velocity, until the required amount of user attention has been taken. For example, an advertisement that has paid for 10% of a user's attention would be modulated until it reaches exactly 10%. If the user paid too little attention, it may grow in size, and if the user pays too much attention, it may shrink in size to avoid being too distracting (Figure 17).

Dynamic attention may be estimated so as to be context-specific, so a user's attention may cost different amounts, depending on the task they are performing, e.g. reading a recipe, and hard limits may be imposed for critical tasks, e.g. car navigation (Figure 18).

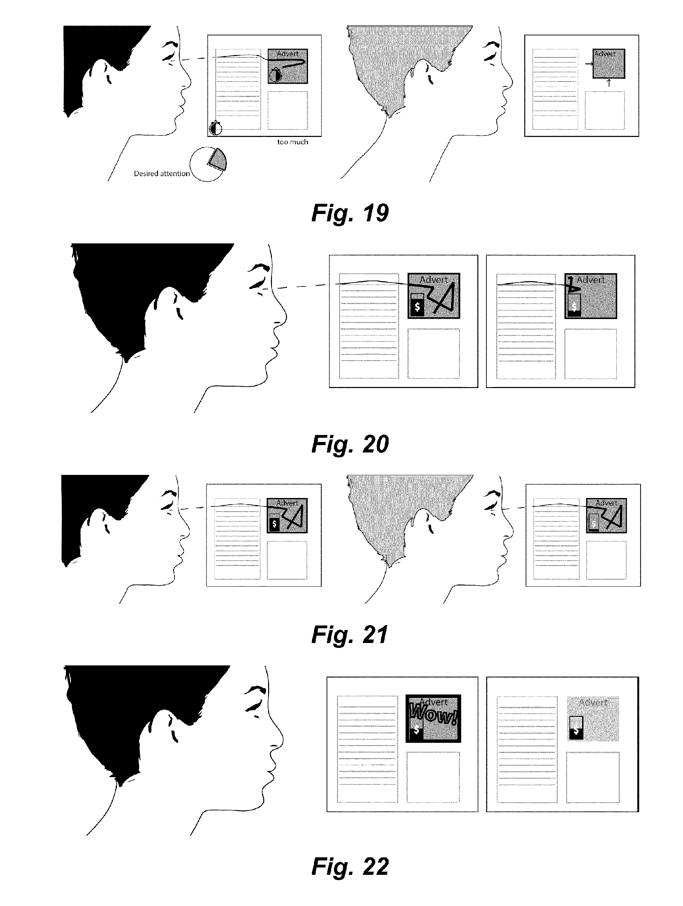

The dynamic attention can produce an area of interest behaviour which may be user-oriented, so a specific user may perceive the advertisement changing in size to fit attention; or advertisement campaign oriented, so many users see a range of statically sized ads, with sizes chosen so the average advertisement attention fits the desired level (Figure 19).

As previously stated, different patterns of attention may be used to infer different types of interest, and advertisements may be priced accordingly. For example, the user may intentionally look at an advertisement for several seconds before clicking, or he/she may simply glance at it a moment before. Clicks derived from these different actions would be worth different amounts, and could be priced accordingly.

It is envisioned that a range of attention profiles may be recognised and priced, e.g. from a nervous glance to a curious stare, and these may involve recognising facial expressions as well as eye position (Figure 20).

These profiles may become specific for each user, so a user's profile learns what a particular person looks like when they express curiosity etc. Different users may also attend differently, or their attention may be more valuable (Figure 21).

Also the timing for showing certain areas may take the system according to the invention into account. In fact, Advertisements may be introduced at a determined moment when the system knows they will not distract the user from their task, for example when the user is not attending to an area of screen.

An advertisement may ease its introduction, by changing its position, size, shape or appearance to not unduly draw attention away from the current task. The advertisement may monitor the user's' attention to attenuate the speed of its arrival, to "grow" or remove itself below the threshold of attention, in a closed-loop fashion.

Internet advertisements are typically sold by "screen space", but display area is not an accurate measure of an advertisement's worth; advertisements of the same area can be made that take more of a viewer's attention, using bright colour, complicated patterns or animation with motion.

However, the area itself is not a good measure of attention. To restrain the attention taken to within reasonable limits, websites often allow only text, or static advertisements. These restrictions limit the engagement possible between users and advertisements, reducing the revenue that can be derived (Figure 22).

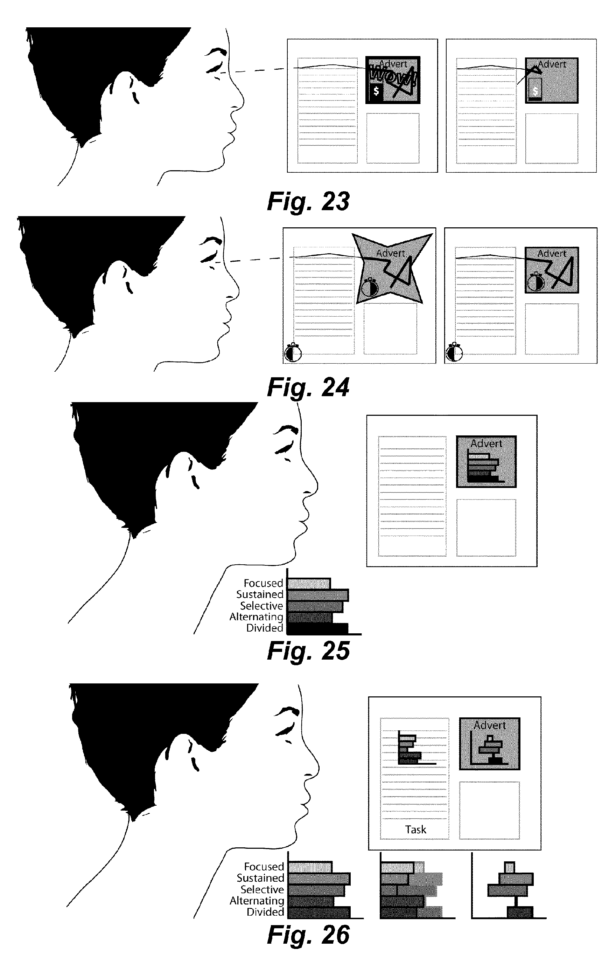

Eye/gaze tracking makes it possible to directly sell the user's attention by monitoring the effect of an advertisement on a user's eyes, because some advertisements are more attractive (Figure 23)

Measuring attention directly, rather than by indirectly limiting the things that may influence attention, frees up advertisements to be of any colour, shape or size. Advertisements may now interact with the user in any way they find most effective, so long as they take only an agreed percentage of the user's attention. The richer advertisements that attention-based pricing makes possible, are potentially more valuable to both advertisers and consumers (Figure 24).

However, the selling of attention presents a problem: attention is not a homogenous quantity that is all worth the same. From an advertiser's perspective, it might be acceptable to price all attention the same, with the expectation that attention will average out over enough users. From a users' perspective, that would not be acceptable: advertisements shown during a video should not dynamically grow themselves to demand the same 10% of your attention as those in a web-page. Clearly there are modes of behaviour where more attention is available, and we are open to distraction.

Because there are different types of attention, it would be useful to categorize them, to make it possible to set limits for different types of attention, and allow them to be priced accordingly. One popular model for categorizing attention was proposed by *Catherine A. Mateer, Ph.D.* and *McKay Moore Sohlberg, Ph.D.,* who identify five levels of attention:

- Focused attention: ("staying on a single task")The ability to respond discretely to specific visual, auditory or tactile stimuli.

- Sustained attention: ("vigilance")The ability to maintain a consistent behavioural response during continuous and repetitive activity.

- Selective attention: ("freedom from distractibility.") The ability to maintain a behavioural or cognitive set in the face of distracting or competing stimuli.

- Alternating attention: ("task shift") mental flexibility that allows individuals to shift their focus of attention and move between tasks having different cognitive requirements.

- Divided attention: ("multi-tasking")This is the highest level of attention and it refers to the ability to respond simultaneously to multiple tasks or multiple task demands.

It should be noted that all these levels of attention can occur simultaneously.

For advertising purposes, an attention profile can be devised as predefined pattern, which is a composite of the different layers of attention.

Knowing a user's attention profile will be useful for advertisers, because it allows them to serve advertisements that match the user's current attention profile. Matching user and advertisement profiles ensures that a user has the right type of attention needed to enjoy the message and act on it (Figure 25).

Attention is something that the user and the advertiser both want, but advertisements should always be secondary to the user's primary task. The attention that a user has to spare for advertising, is the difference between the user's current attention profile and the primary task's required attention profile (Figure 26).

Placing advertisements in this way ensures that advertisements are only served when the user has the capacity to attend to them. It also ensures the user is not overwhelmed with advertisements that are beyond their ability to attend to them, and are never distracted from their ability to complete their primary task.

Knowing the user's spare attention profile allows the placement of advertisements that are a good fit. Advertisers can specify a desired attention profile for their advertisements, and advertisements that match the spare attention profile can be served to the user. An advertisement that is a good fit would closely match the spare attention profile, and not exceed it in any level of the profile.

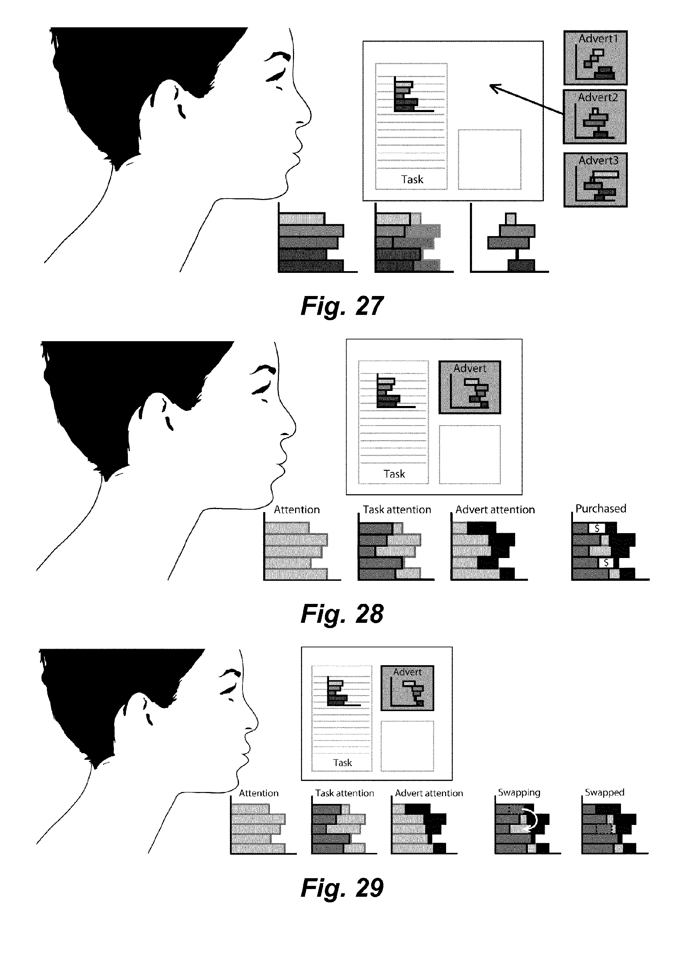

Users will like it more, because it will feel perfectly tailored to their spare attention, and never overwhelming (Figure 27).

In order to sell advertisements at rates dependant on consumer attention types, each component of the attention profile must be measured.

Attention types may be measured by eye movement, alongside other methods (such as content layout touch input etc). Using these inputs, we can derive a formula for each attention types. For Mateer and Sohlberg's attention types, suitable formulae may be:

- **Focused attention**: response time to on-screen prompts or events. This could be eye response, or touch response. The prompt could be a dialog that requires input, or it could be a change in display.

$$Focussed\ attention\ =\ HUMAN\_AVERAGE\_RESPONSE\ /\ (response\_time - prompt\_time)$$

- **Sustained attention**: the eye fixations lie within a boundary. For phones that support only a single task, that boundary is the phone itself. For phones that support multiple tasks, a method must be found to define the boundary between tasks. the program itself may report the boundary, or image recognition may be used. Most smartphones contain a notification panel of some kind - usage of which constitutes a break in attention.

*Sustained     attention     =     time_within_boundary     /*
*HUMAN_AVERAGE_ATTENTION*

- **Selective attention**: what are the competing stimuli in a phone?
  ○ Things inside the phone - how fast does a user return to their task after the completion of a distraction?
  ○ Things outside the phone - look for changes in scene and see how often the user attends to things outside the phone.

*Selective     attention     =     work_rate     *     distraction_rate     /*
*HUMAN_AVERAGE_WORK*

- **Alternating attention**: for single-task phones, this is the time it takes to re-engage in a task having attended to something outside the phone. For multi-task phones, it may be the time taken to re-engage with each task, having switched context. Alternating attention = *HUMAN_AVERAGE_RESUME* / *time_to_first_input*

- **Divided attention**: the ability to look at and touch two tasks continuously in a round-robin way. Our measure of divided attention is a combination of

  ○ the period to complete a secondary task and return to the primary task

  ○ the frequency of how often per minute a change between tasks occurs

*Divided     attention     =     1     /     period_to_attend_both_tasks     +*
*frequency_of_task_switch*

The result of these attention profile scores produces a bar graph profile of attention. These instantaneous profile measurements may be combined with environmental monitoring, diurnal patterns and historical attention to create a stable profile of an individual's current attention capability.

If an advertisement requires more attention than a user has to spare, one possibility is that advertisers may buy some of the user's attention. If the user is willing to sell some of the attention they were spending on the core task (e.g. for monetary reward or in exchange for a discounted smartphone), then advertisers may purchase a percentage of that primary attention, so the user will momentarily pay less attention to their primary task.

When attention is considered as a profile, then the purchase of attention can be more fine-grained. If an advertisement's profile does not fit the profile of a user's available attention, an advertiser may buy some of a profile layer, to create a gap that fits the advertisement's required attention profile (Figure 28).

The trade in attention may be established between parts of the attention profile: an advertisement's profile may require more attention than that is available in one layer of a user's profile, but the user may have spare attention capacity in another layer of their profile. The user can apply cognitive flexibility to shift part of the main task to a different attention layer, in order to attend to the advertisement.

For example, a user's core work task may leave the user with no spare attention of type 'A', but they have spare attention of type 'B'. An advertisement may require type 'A' attention, but the user has none to spare - it is all consumed by the core work task. For suitable compensation, the user may find it acceptable to perform the core task differently, in order to shift the core task's profile. By performing the core task differently, the user transfers some of the attention work from type 'A' to type 'B'. This exchange of cognitive flexibility is normal for most people - for example, given a task of monitoring an object for a long time, most people will switch from staring continuously at it (focussed attention), to regularly monitoring it (alternating attention). That switch of attention type may give them the ability to attend to other (Figure 29).

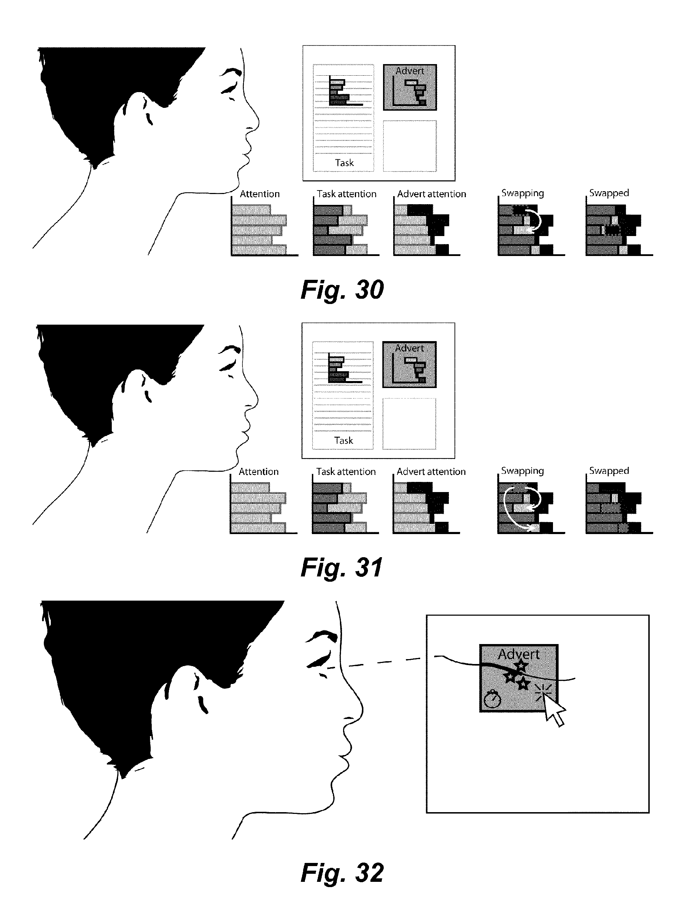

Alternatively, the advertiser can accept an attention swap between layers of the advertisement's attention profile, to arrive at sufficient attention (Figure 30).

In reality, attention types are often not discrete or easily interchangeable. Changing a task's domain comes at some additional cost: the attention requirements of a task that is moved to another layer can be many times larger than in its original layer. For example, a sustained attention task of reading a text may be transferred to the divided attention layer by continually glancing back at the text to read small chunks. But dividing attention incurs many context changes, which may make the task considerably more attention demanding than it was in its original layer. It is proposed that these costs can be modelled and priced.

In other words, swapping attention profile layers incurs some cost, but swapping a small amount of attention from one layer can cost a large amount of several other layers (Figure 31).

Instead of taking attention from other tasks, it may be possible to manipulate the user experience to match the advertisement's optimum attention profile. For example, the timing and position of operating system components may be manipulated to produce the desired free attention profile. In this case, the advertiser pays by how closely the operating system can deliver the required attention profile for the advertisement.

With reference to Figures 32 to 36, a user who allows a percentage of their attention to be purchased, must not be annoyed. Usually, eye tracking is adept at deciding when someone's attention can be spared, so no overt negotiation is required. However, there are inevitably some circumstances where eye tracking will misinterpret the attention available, and advertising demand may become a nuisance. The present method can be used to prevent the advertising becoming an unwelcome distraction:

- limits on the maximum size an advertisement can grow to as it seeks attention, so it doesn't take over the screen or overwrite the content.

- facial expression monitoring, to detect distress

- confidence monitoring, to ensure that attention values with low confidence are not relied on unduly.

- environment monitoring, to detect difficult situations (e.g. loud or sudden movement)

In advertising, timing can be very important. Analysing eye behaviour over time can allow advertising prices to be raised when the timing is most lucrative.

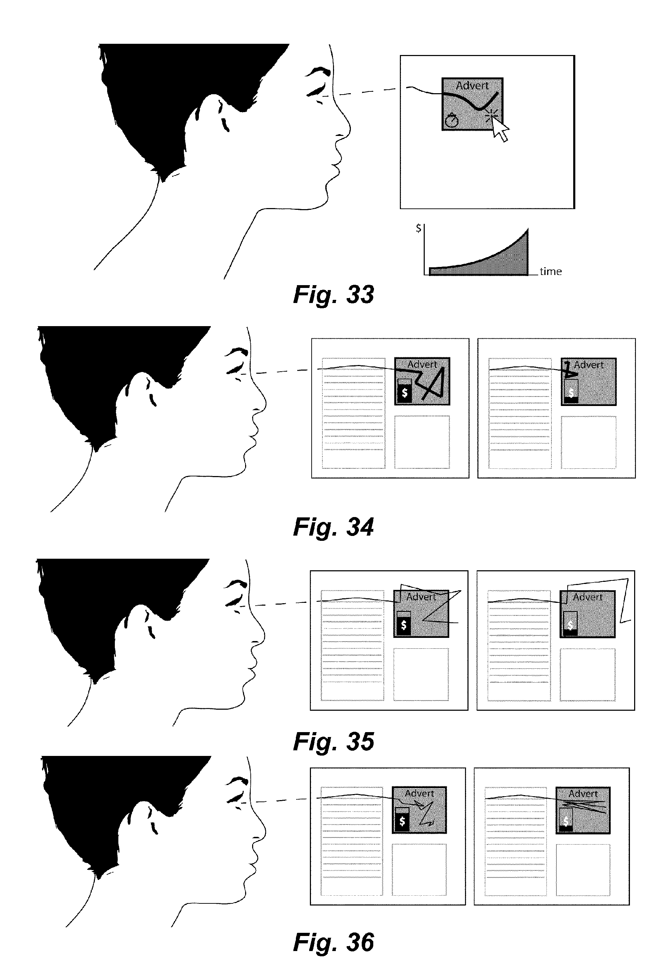

The eye actions that surround the moment of a click (Figures 32 and 33) can be used to assess its value:

- threshold - click doesn't count unless there has been enough looking at the advertisement beforehand (Figure 32);

- logarithmic - click price increases non-linearly with time spent looking at an advertisement (Figure 33);

- gaze location-based - location within the advertisement that was looked at, e.g. text, image, centre, edge (Figure 34);

- repetition based - how many times it has been looked at before it was clicked (Figure 35); and

- pattern-based - certain ways of looking indicate types of interest and attention that may be more or less valuable. These can be recognised to fit a model of interest, e.g. "curiosity" or "confusion" (Figure 36);

Also previous actions can inform future action in a variety of ways, that can impact on the value of a click. If an area is more likely to be clicked on because of past behaviour, advertising rates can be dynamically adjusted accordingly. Some methods for using past action are described in the following.

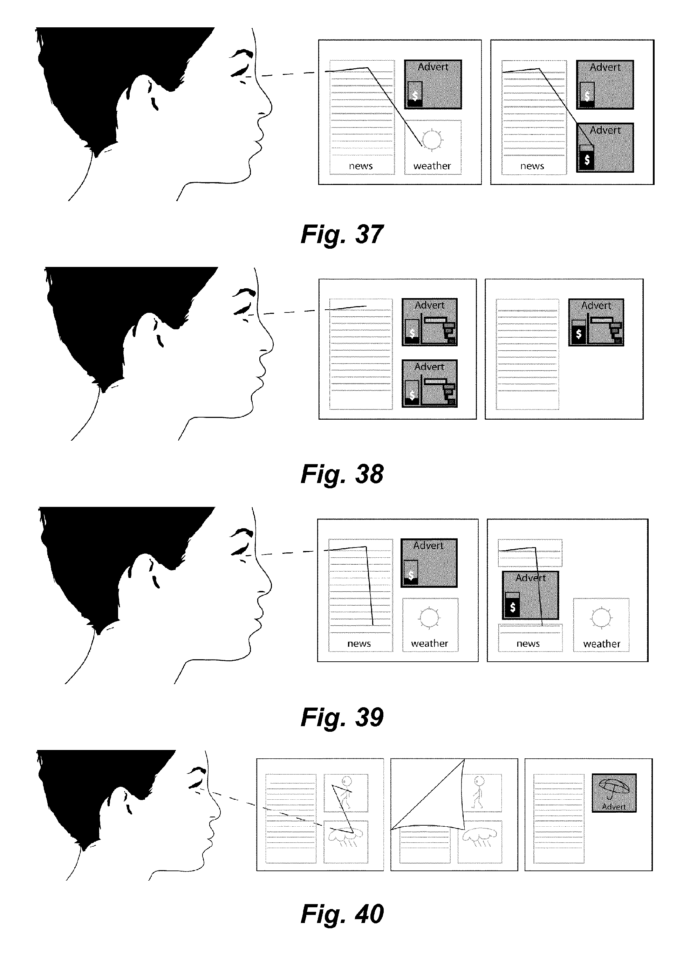

People can be prepared in advance to look at a certain location next, if something they expect regularly turns up in the same location. This kind of priming can be incidental, by tracking previous eye movements, or deliberate, e.g. by cueing, which means seeding with repeated triggers to look at a location (Figure 37).

Otherwise, the timing or type of advertisements can be adjusted to modify the user's attention profile, making subsequent advertisements more valuable. For example, advertisements that have the same attention profile may be timed to arrive together in a bursts, allowing the user to anticipate the type of attention that will be required, and ensure they are prepared with sufficient free attention, i.e. sequencing advertisements in a row to modify the user's attention profile can increase their value (Figure 38).

With reference to Figures 39 to 43, it is explained how the knowledge of the eye path can be used to price advertisements.

Seven different mechanism can be proposed:

- *screen placement between topics*: monitor what user looks at, and place an advertisement in the path between them all (Figure 39);

- *thematic placement between topics*: monitor what user looks at, and choose an advertisement thematically between them all (Figure 40).

- *thematic sandwiching*: put advertisements thematically to either side of a desired topic, so users think it by joining the dots (e.g. a dog in one advertisement, a man walking in the other... suggests dog walking);

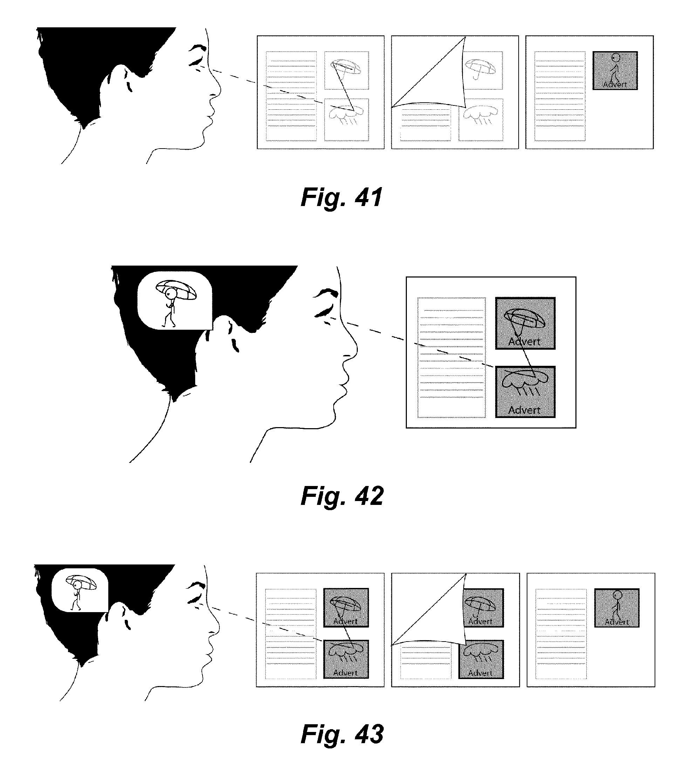

- *extrapolate*: monitor what a user looks at and predict where their attention is going, e.g. flour-->egg-->sugar... icing sugar? (Figure 41);

- *story reading*: when we are presented with a sequence of images, people naturally imagine a "story" that binds them together. We remember stories better than individual messages. We can use knowledge of what the user has looked at, to choose new advertisements that continue to tell an integrated story that make the advertisements more valuable (Figure 42);

- *meta-stories*: the selection of advertisements and knowledge of what has been seen can be arranged to tell a meta-story we want to tell, e.g. serve other advertisements that suggest the advertisement we want "refreshing" + "sweet" + "youth" = unsaid "cola", without ever actually mentioning the product; and

- *bundling*: knowledge of what users have looked at can be used to select advertisements that belong together, to create a theme that is stronger than any single advertisement (Figure 43).

## Claims

1. System for estimating views on display areas, comprising:

   • a display wherein at least certain areas are provided, delimited in a respective visually displayed portion on the display;
   • a camera associated with said display, apt to frame a user's face and thereby producing a digital video stream thereof;
   • gaze tracking means, operating with processor means, receiving said video stream and continuously generating a gaze pattern of the user's gaze on the display, the interaction between said gaze pattern and said at least certain areas on the display resulting in view patterns continuously generated for each of said at least certain areas; and
   • means for comparing each of said view patterns with one or more predefined patterns to continuously produce view information according to said view patterns.

2. System according to claim 1, wherein said at least certain areas are provided on the display through a remote server possibly through a network, said view patterns being sent from a device incorporating said display to the remote server for comparing each of said view patterns with one or more predefined patterns to produce view information.

3. System according to claim 2, wherein a plurality of devices, each incorporating one or more displays, are connected to a remote server for comparing each of said view patterns with one or more predefined patterns to produce said view information; the camera, the gaze tracking means and the processor means being incorporated within the device.

4. System according to claim 2 or 3, wherein a web browser interface is displayed on said display, the remote server providing web content on said web browser interface including said at least certain areas.

5. System according to claim 4, wherein said web content is modified by the remote server according to said view information.

6. System according to any of preceding claims, wherein said view information include billing information continuously derived from the comparison between each of said view patterns with said one or more predefined patterns.

7. System according to claim 6, wherein the billing information concerns how often said at least certain areas are viewed.

8. System according to claim 6, wherein the billing information concerns the amount of time a user spends looking at said at least certain areas.

9. System according to any of preceding claims, wherein the view pattern is used in combination with a pointer system acting on the display to highlight or activate said at least certain areas.

10. Method for estimating views on display areas on at least one display wherein at least certain areas are shown, delimited by a respective visually displayed box on the display, a camera being associated to said display apt to frame a user's face, thereby producing a digital video stream thereof, comprising the steps of:

- continuously tracking the user's gaze on the display from said digital video stream and continuously generating a gaze pattern of the user's gaze on the display, the interaction between said gaze pattern and said at least certain areas on the display resulting in view patterns continuously generated for each of said at least certain areas; and
- comparing each of said view patterns with one or more predefined patterns to continuously produce view information according to said view patterns.

11. Method according to claim 10, wherein said at least certain areas are provided on the display through a remote server possibly through a network, said view patterns being sent from a device incorporating said display to the remote server for comparing each of said view patterns with one or more predefined patterns to produce view information.

12. Method according to claim 11, wherein a plurality of devices, each incorporating one or more displays, are connected to a remote server for comparing each of said view patterns with one or more predefined patterns to produce said view information; the camera, the gaze tracking means and the processor means being provided within the device.

13. Method according to claim 11 or 12, wherein a web browser interface is displayed on said display, the remote server providing a web content on said web browser interface including said at least certain areas.

14. Method according to claim 13, wherein said web content is modified by the remote server according to said view information.

15. Method according to any of preceding claims from 10 to 14, wherein said view information include billing information continuously derived from the comparison between each of said view patterns with said one or more predefined viewer's attention patterns.

16. Method according to claim 15, wherein the billing information concerns how often said at least certain areas are viewed.

17. Method according to claim 15, wherein the billing information concerns the amount of time a user spends looking at said at least certain areas.

18. Method according to any of preceding claims from 10 to 17, wherein the view pattern is used in combination with a pointer system acting on the display to highlight or activate said at least certain areas.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

Focused
Sustained
Selective
Alternating
Divided

**Fig. 25**

Task

Focused
Sustained
Selective
Alternating
Divided

**Fig. 26**

**Fig. 27**

**Fig. 28**

**Fig. 29**

**Fig. 30**

**Fig. 31**

**Fig. 32**

**Fig. 33**

**Fig. 34**

**Fig. 35**

**Fig. 36**

Fig. 37

Fig. 38

Fig. 39

Fig. 40

**Fig. 41**

**Fig. 42**

**Fig. 43**

Europäisches
Patentamt

European
Patent Office

Office européen
des brevets

## EUROPEAN SEARCH REPORT

**Application Number**

EP 13 17 8759

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sencogi: "Presentation of Sencogi eye tracking", YouTube INTERNET ARTICLE, 25 June 2013 (2013-06-25), XP054975277, Retrieved from the Internet: URL:http://www.youtube.com/watch?v=S16NMZO Jehk [retrieved on 2014-01-02] * the whole document * | 1-18 | INV. G06Q30/02 |
| X | Ricardo Bilton: "Why eye-tracking could be the cure for poorly placed web ads", INTERNET ARTICLE, 3 October 2012 (2012-10-03), XP055094327, Retrieved from the Internet: URL:http://venturebeat.com/2012/10/03/eyet rackshop-web-advertising/ [retrieved on 2013-12-19] * the whole document * | 1-18 | |
| X | Tarun Wadhwa: "Eye-Tracking Technologies Are About To Make Advertising Even More Invasive", INTERNET ARTICLE, 8 May 2013 (2013-05-08), XP055093085, Retrieved from the Internet: URL:http://www.forbes.com/sites/tarunwadhw a/2013/05/08/with-recent-advances-in-eye-t racking-advertising-set-to-become-even-mor e-invasive/ [retrieved on 2013-12-12] * the whole document * | 1-18 | **TECHNICAL FIELDS SEARCHED (IPC)** G06Q A61B |

-/--

The present search report has been drawn up for all claims

| Place of search | Date of completion of the search | Examiner |
|---|---|---|
| Munich | 7 January 2014 | Krafft, Gerald |

EPO FORM 1503 03.82 (P04C01)

<table>
<tr><td colspan="2" rowspan="2">Europäisches<br>Patentamt<br>European<br>Patent Office<br>Office européen<br>des brevets</td><td rowspan="2">EUROPEAN SEARCH REPORT</td><td>Application Number</td></tr>
<tr><td>EP 13 17 8759</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | John Villasenor: "Eye-Tracking Computers Will Read Your Thoughts", INTERNET ARTICLE, 27 March 2012 (2012-03-27), XP055093089, Retrieved from the Internet: URL:http://www.slate.com/articles/technology/future_tense/2012/03/eye_tracking_computer_programs_and_privacy_.html [retrieved on 2013-12-12] * the whole document * ----- | 1-18 | |
| X | Ariel Bleicher: "Eye-Tracking Software Goes Mobile - Umoove aims to bring hands-free control to phones and tablets", INTERNET ARTICLE, 23 April 2013 (2013-04-23), XP055094245, Retrieved from the Internet: URL:http://spectrum.ieee.org/computing/software/eyetracking-software-goes-mobile [retrieved on 2013-12-18] * the whole document * ----- | 1-18 | |
| X | Wikipedia: "Eye tracking", INTERNET ARTICLE, 23 July 2013 (2013-07-23), XP055093038, Retrieved from the Internet: URL:http://en.wikipedia.org/w/index.php?title=Eye_tracking&oldid=565484929 [retrieved on 2013-12-12] * the whole document * ----- | 1-18 | TECHNICAL FIELDS SEARCHED (IPC) |
| X | US 2013/151333 A1 (EL KALIOUBY RANA [US] ET AL) 13 June 2013 (2013-06-13) * figure 1 * ----- | 1-18 | |
| X | KR 2010 0021702 A (RHEE PHILL KYU [KR]) 26 February 2010 (2010-02-26) * the whole document * ----- | 1-18 | |

-/--

The present search report has been drawn up for all claims

| Place of search | Date of completion of the search | Examiner |
|---|---|---|
| Munich | 7 January 2014 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 13 17 8759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/154418 A1 (GOOGLE INC [US]; NEVEN HARTMUT [US]) 15 November 2012 (2012-11-15) * figure 3 * ----- | 1-18 | |
| X | US 2008/147488 A1 (TUNICK JAMES A [US] ET AL) 19 June 2008 (2008-06-19) * paragraph [0045] - paragraph [0050] * ----- | 1-18 | |
| X | EP 2 439 611 A1 (LG ELECTRONICS INC [KR]) 11 April 2012 (2012-04-11) * the whole document * ----- | 1-18 | |
| X | eyetrackshop: "How EyeTrackShop's webcam eye tracking works", YouTube INTERNET ARTICLE, 29 November 2011 (2011-11-29), XP054975282, Retrieved from the Internet: URL:http://www.youtube.com/watch?v=2IK_pRLuB_E [retrieved on 2014-01-06] * the whole document * ----- | 1-18 | |

**TECHNICAL FIELDS SEARCHED (IPC)**

The present search report has been drawn up for all claims

| Place of search | Date of completion of the search | Examiner |
|---|---|---|
| Munich | 7 January 2014 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 17 8759

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2014

| Patent document cited in search report | | Publication date | Patent family member(s) | | Publication date |
|---|---|---|---|---|---|
| US 2013151333 | A1 | 13-06-2013 | US | 2013151333 A1 | 13-06-2013 |
| | | | WO | 2013086357 A2 | 13-06-2013 |
| KR 20100021702 | A | 26-02-2010 | NONE | | |
| WO 2012154418 | A1 | 15-11-2012 | US | 2012290401 A1 | 15-11-2012 |
| | | | WO | 2012154418 A1 | 15-11-2012 |
| US 2008147488 | A1 | 19-06-2008 | NONE | | |
| EP 2439611 | A1 | 11-04-2012 | CN | 102445989 A | 09-05-2012 |
| | | | EP | 2439611 A1 | 11-04-2012 |
| | | | KR | 20120056936 A | 05-06-2012 |
| | | | US | 2012083312 A1 | 05-04-2012 |

EPO FORM P0459

For more details about this annex : see Official Journal of the European Patent Office, No. 12/82

**EP 2 833 308 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13162802 A